# EUROPEAN PATENT APPLICATION

(11) **EP 2 366 674 A1**
(43) Date of publication of application: **21.09.2011**
(21) Application number: 09833287.7
(22) Date of filing: 28.10.2009
(51) Int. Cl.: C03B 18/16, C23C 4/04

(54) **FILMED METAL MEMBER FOR FLOAT GLASS MANUFACTURING EQUIPMENT AND FLOAT GLASS MANUFACTURING METHOD**

(30) Priority: 16.12.2008 JP 2008319541
(71) Applicant: Asahi Glass Company Limited, Chiyoda-ku Tokyo 100-8405 (JP)
(72) Inventor: NIWA Akifumi, Tokyo 100-8405 (JP); HAMASHIMA Kazuo, Tokyo 100-8405 (JP); BAN Nobuyuki, Tokyo 100-8405 (JP)
(74) Representative: Müller-Boré & Partner Patentanwälte
(86) International application number: PCT/JP2009/068525
(87) International publication number: WO 2010/070982

(57) **Abstract**

The present invention provides a metal member that is used so that there is a portion that is exposed to the atmosphere in a float bath, and with which diffusion of Fe into the float bath is inhibited and thereby preventing the defect from being generated on the surface of a plate glass. The present invention relates to a metal member with a film for a float glass manufacturing equipment that has a portion exposed to the atmosphere in a float bath in which the film has a mean thickness of from 50 to 500 µm and contains Ni and/or Co, Cr and Al₂O₃ as main components; the Al₂O₃ content in the film is from 5 to 40% by volume; the Al₂O₃ is present in a thin film state in the surface direction of the metal member, inside the film; and the metal member contains Fe in an amount of from 40 to 98% by mass and has the film on the exposed portions.

## Description

### TECHNICAL FIELD

The present invention relates to a filmed metal member for a float glass manufacturing equipment and a float glass manufacturing method.

### BACKGROUND ART

It is known that the surface of a metal member used as parts of a gas turbine engine and the like is coated with a material comprising Ni, Co, Cr, Al and Y as main components in order to prevent oxidation, corrosion, abrasion and the like (Patent Documents 1 to 3). It is also known that the coating having such a composition has high oxidation resistance.

On the other hand, a metal member (such as a sealing member or a brick-receiving member) used so that there is a portion exposed to the atmosphere in a float bath in a float glass manufacturing equipment generally comprises stainless steel. However, because the atmosphere in the float bath is an oxygen-free state, the portions of the metal member, exposed to the atmosphere in the float bath are not oxidized in principle. Furthermore, the stainless steel has excellent corrosion resistance and the like in the use in the float bath. For this reason, coating for preventing oxidation or improving corrosion resistance was unnecessary.

### PRIOR ART REFERENCE

### PATENT DOCUMENT

Patent Document 1: JP-A-58-37146
Patent Document 2: JP-A-62-67145
Patent Document 3: JP-A-2002-3747

### SUMMARY OF THE INVENTION

### PROBLEMS THAT THE INVENTION IS TO SOLVE

There was the case that the defect comprising Fe as a main component is generated on the surface of a plate glass formed by a float bath. As a result of investigations of the cause by the present inventors, it has been proved that Fe diffuses into the atmosphere of the float bath from the surface of a metal member exposed to the atmosphere of the float bath, the Fe bonds to other element to form contaminants comprising Fe as a main component, and the contaminants fall to the surface of the plate glass, thereby generating the defect.

One object of the present invention is to provide a metal member used so that there is a portion exposed to the atmosphere in a float bath in which diffusion of Fe into the float bath is inhibited, thereby preventing the defect from being generated on the surface of a plate glass. Another object of the present invention is to provide a float glass manufacturing equipment using such a metal member. Still another object of the present invention is to provide a method for manufacturing a float glass, which manufactures a plate glass using such a float glass manufacturing equipment.

### MEANS FOR SOLVING THE PROBLEMS

The present invention relates to the following (1) to (3).
(1) A metal member with a film for a float glass manufacturing equipment, having a portion exposed to the atmosphere in a float bath, wherein the film has a mean thickness of from 50 to 500 µm and comprises Ni and/or Co, Cr and Al₂O₃ as main components; the Al₂O₃ content in the film is from 5 to 40% by volume; the Al₂O₃ is present in a thin film state in the surface direction of the metal member, inside the film; and the metal member contains Fe in an amount of from 40 to 98% by mass and has the film on the exposed portion.
(2) A float glass manufacturing equipment comprising the metal member with a film according to the above (1).
(3) A method for manufacturing a float glass, which comprises manufacturing a plate glass using the float glass manufacturing equipment according to the above (2).

### ADVANTAGE OF THE INVENTION

According to the present invention, diffusion of Fe into the atmosphere in a float bath from a metal member used so that there is a portion exposed to the atmosphere in the float bath is inhibited, thereby the defect on the surface of a plate glass can be inhibited.

### BRIEF DESCRIPTION OF THE DRAWINGS

Figs. 1(a) and 1(b) are explanatory views of an example of the filmed metal member of the present invention.
Fig. 2 is a cross-sectional picture (180 magnifications) of the filmed metal member of the present invention.
Fig. 3 is a schematically cross-sectional view of the filmed metal member of the present invention.
Figs. 4 are cross-sectional picture (180 magnifications) and element distribution views, of the filmed metal member of the present invention in Examples.

### MODE FOR CARRYING OUT THE INVENTION

The metal member with a film of the present invention is described below.
The metal member with a film (filmed metal member) of the present invention is a filmed metal member for a float glass manufacturing equipment, having a portion exposed to the atmosphere in a float bath, wherein the film has a mean thickness of from 50 to 500 µm and comprises Ni and/or Co, Cr and Al₂O₃ as main components, the Al₂O₃ content in the film is from 5 to 40% by volume, the Al₂O₃ is present in a thin film state in the surface direction of the metal member inside the film, and the metal member contains Fe in an amount of from 40 to 98% by mass and has the film on the exposed portion.

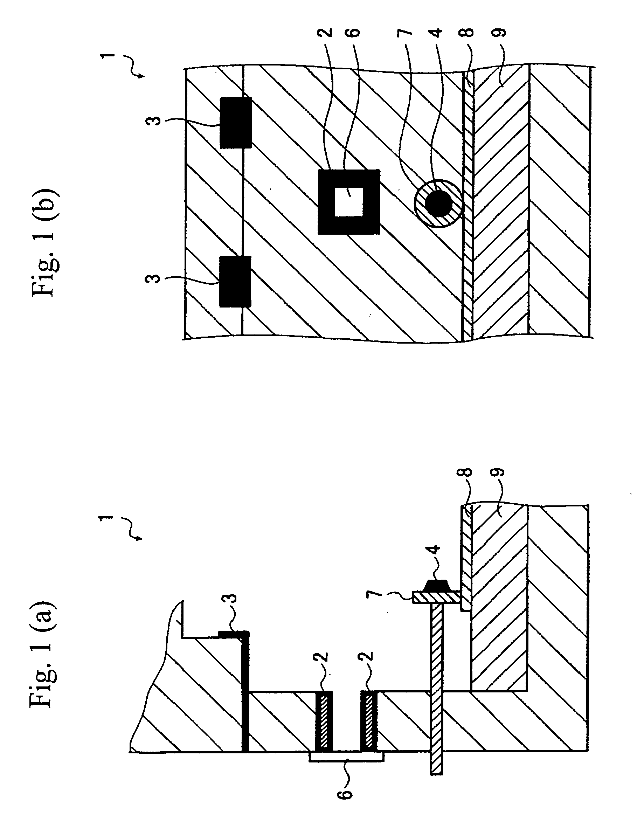

The filmed metal member of the present invention is a member used so that there is a portion exposed to the atmosphere in the float bath which is one of a glass manufacturing equipment. Examples of the member include a sealing member 2 of an observation window portion for observing the atmosphere in the float bath during operation, a brick-receiving member 3 provided on the upper side in a float bath 1, and an assist roll (glass hold-down roll) cover 4, as shown in Fig. 1 (a schematically vertical cross-sectional view 1 (a) (a view showing a cross-section surface nearly vertical to the flow direction of a glass ribbon) and a schematically transverse cross-sectional view 1 (b) (a view showing a cross-section surface nearly parallel to the flow direction of a glass ribbon) of the float bath 1). However, the filmed metal member of the present invention is not limited to those. In Fig. 1, the numeral 6 indicates an observation window, 7 indicates an assist roll, 8 indicates a glass ribbon, and 9 indicates a molten tin.

The film in the filmed metal member of the present invention is described below.
The formation method of the film in the filmed metal member of the present invention is not particularly limited so long as Al₂O₃ is present inside the film in a thin film state in a surface direction of the metal member. However, the film is preferably formed by thermal-spraying a powder raw material comprising Ni and/or Co, Cr and Al as main components onto the surface of the metal member by an atmospheric plasma spraying method.

The atmospheric plasma spraying method is a method of melting or semi-melting the powder raw material by high temperature plasma jet, accelerating and spraying onto the surface of the metal member. The film having a desired thickness can be formed by repeatedly conducting the operation of such a method. According to the atmospheric plasma spraying method, a dense film can be formed relatively easily. Because the method is conducted in the atmosphere, when a molten or semi-molten raw material is sprayed, the surface of the raw material sprayed is instantaneously oxidized. In particular, Al is easily oxidized as compared with other components. Therefore, Al₂O₃ is instantaneously oxidized in a thin film state (hereinafter, it may be referred to as an "Al₂O₃ thin film") on the surface of the raw material sprayed. As a result, the raw material next sprayed is sprayed on the surface of the Al₂O₃ thin film.
Thus, when the operation of spraying the raw material is repeatedly conducted, a film having the Al₂O₃ thin film inside thereof can be formed. Because the Al₂O₃ thin film is formed as above, the Al₂O₃ thin film is formed in the film discontinuously so as to spread in the surface direction (that is, a direction parallel to the surface) of the metal member on which the raw material is sprayed.
When the cross-section surface of the filmed metal member of the present invention is observed with an electron microscope, the presence of the Al₂O₃ thin film can be confirmed.
Contrary to this, because the conventional thermal-sprayed film formed on a gas turbine engine or the like has the purpose to prevent oxidation, corrosion and the like and to use as a base sheet of a topcoat layer of ceramics, and further in order to avoid interlaminar separation, the film is formed by thermal-spraying the raw material by a plasma spraying method under reduced pressure or a high speed flame spraying method such that the Al₂O₃ thin film is not present inside the film.

The presence form of the Al₂O₃ thin film inside the film is described below by reference to the drawings.

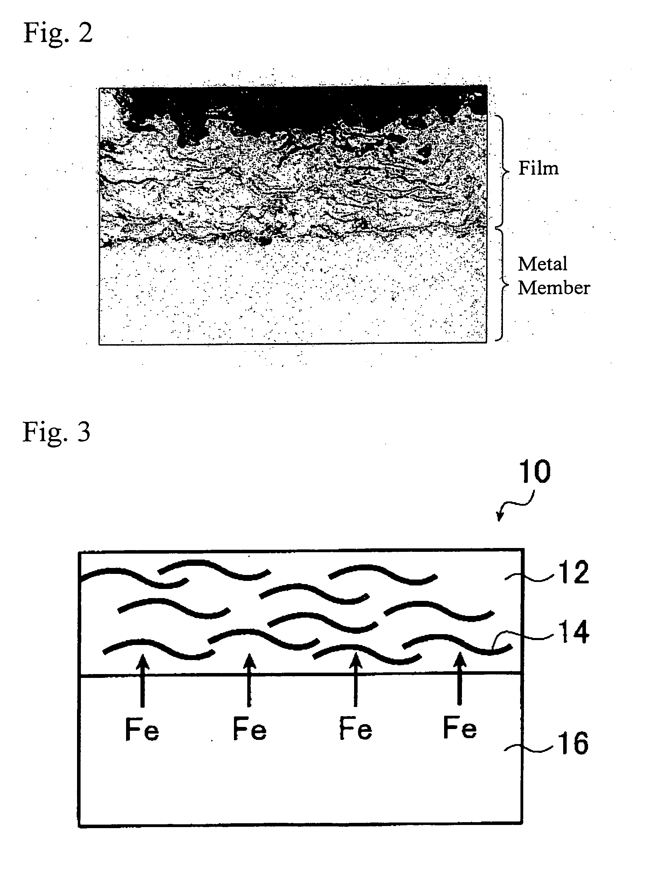

Fig. 2 is an electron microscopic picture (180 magnifications) of a cross-section surface of the filmed metal member of the present invention, and Fig. 3 is a simplified view thereof.

In the cross-sectional view of Fig. 2, the Al₂O₃ thin film appears in a discontinuous line form. It is seen that there are a lot of thin films inside the film, and each film is present so as to basically spread in a surface direction (a direction nearly parallel to the surface) of the metal member. It is further seen that the thin film is present such that many thin films are laminated in a thickness direction of the film.
A view simplifying and showing the state is Fig. 3. In Fig. 3, the numeral 10 is the filmed metal member of the present invention, 12 is a film, 14 is an Al₂O₃ thin film, and 16 is a metal member.

The Al₂O₃ thin film has a thickness of nearly from 0.5 to 20 µm, and preferably from about 1.0 to 10 µm.

As shown in Fig. 3, the Al₂O₃ thin film blocks the diffusion (the arrows in Fig. 3) of Fe into the film from the metal member, and as a result, it is considered that this inhibits release of Fe into a float bath atmosphere from the filmed metal member of the present invention.

In the present invention, the phrase "Al₂O₃ thin film is present inside the film" means that when element distribution of the cross-section surface is measured with EPMA, EDS (that is, EDX) or the like, it can be confirmed that Al and O are distributed in the film so as to form a thin film.
Therefore, the present invention has quite different purpose, constitution and effect from, for example, a gas turbine blade having been subjected to the conventional coating as above.

Each component constituting the film is described below.
The film comprises Ni and/or Co, Cr and Al₂O₃ as main components. That is, the film comprises Ni, Cr and Al₂O₃ as essential components and main components, comprises Co, Cr, and Al₂O₃ as essential components and main components, or comprises Ni, Co, Cr, and Al₂O₃ as essential components and main components.
The term "main component" used herein means that the component is contained in an amount of 80% by volume or more, preferably 90% by volume or more, and more preferably 95% by volume or more.

Components constituting the film, other than the above-described main components are not particularly limited. The components other than the main components include components contained as impurities in a thermal-spraying raw material.

The film comprises preferably Ni, Co, Cr, Al and their oxides, more preferably Ni, Cr, Al and their oxides (that is, it is more preferred that Co is not contained), and further preferably Ni, Cr and Al₂O₃.
It is considered that Al is largely present as an oxide inside the film. On the other hand, it is considered that largely Ni, Co and Cr do not convert into oxides.

In the film, the content of Al₂O₃ is from 5 to 40% by volume, preferably from 10 to 35% by volume, and further preferably from 15 to 30% by volume. In such a range, the thin film comprising Al₂O₃ is formed in a sufficient amount, and diffusion of Fe from the metal member can be inhibited.

In the film, the content of Ni and/or Co is preferably from 35 to 75% by volume, more preferably from 40 to 70% by volume, and further preferably from 45 to 65% by volume.
The content of Ni and Co used herein means the content (% by volume) of Ni atom and Co atom present in the film. Therefore, the content of Ni and Co is the total content of not only Ni atom and Co atom of Ni and Co present as a simple substance, but also Ni atom and Co atom of Ni and Co present as oxides and the like. The same is applied to the following Cr, Y and Mo.

It is more preferred that the film does not substantially contain Co.

In the film, the content of Cr is preferably from 5 to 40% by volume, more preferably from 10 to 35% by volume, and further preferably from 15 to 30% by volume.

The film preferably contains Y, and the content of Y in the film is preferably from 0.1 to 3.0% by volume, more preferably from 0.2 to 2.0% by volume, and further preferably from 0.5 to 1.5% by volume. When the film contains Y, the Al₂O₃ thin film is further difficult to separate.

The film may further contain Mo. In this case, the Mo content is preferably 5% by volume or less, and more preferably 2% by volume or less.

The Al₂O₃ content in the film is measured with the combination of cross-section EDX analysis and image processing, or the combination of cross-section EPMA analysis and image processing.
That is, the content (% by volume) of Al₂O₃ in the film is obtained as follows. Sites corresponding to Al₂O₃ (flattened particle portions) are confirmed by cross-section EDX analysis or cross-section EPMA analysis, and are digitized into the flattened particle portions and other sites by cross-section surface image analysis, thereby obtaining area ratio of the flattened particle portions, and the content (% by volume) of Al₂O₃ is obtained from the area ratio. The content (% by mass) of Al₂O₃ in the film is measured with cross-section EDX analysis or cross-section EPMA analysis.
Contents (% by mass) of Ni, Co and Cr in the film are measured with glow discharge optical emission spectroscopy (GDS), EDX, EPMA or the like.
Contents (% by mass) of Y and Mo in the film are measured with glow discharge optical emission spectroscopy.

Thickness of the film is described below.
Mean thickness of the film is preferably from 50 to 500 µm, more preferably from 100 to 400 µm, and further preferably from 200 to 300 µm. In such a thickness, the film is difficult to separate from the metal member, and diffusion of Fe can be further inhibited.
The mean thickness of the film is a mean value of thicknesses measured by observing the cross-section surface using electron microscope or a mean value of thickness measured using micrometer, measured at optional three points of the representative portions of a central portion and the like of the portion having the film of the metal member thereon.

Atmosphere temperature of the float bath in which the filmed metal member of the present invention is provided is from about 700 to 1,300°C as described hereinafter. The film in the filmed metal member of the present invention does not separate from the metal member itself even though exposed to such high temperature, thereby diffusion of Fe can be inhibited.

The metal member is described below.
The metal member in the filmed metal member of the present invention contains Fe in an amount of from 40 to 98% by mass, and preferably from 50 to 85% by mass. The metal member is preferably a stainless steel.

The filmed metal member of the present invention has the film on the portion exposed to the inside of a float bath. Unexposed portions may have the film.

A method for producing the filmed metal member of the present invention is described below.
A method for forming the filmed metal member of the present invention is preferably that the member is formed by an atmospheric plasma spraying method, considering that the Al₂O₃ thin film is easily allowed to be present in the film. For example, the member can be formed in the atmosphere under the standard conditions using 9MB thermal-spraying device, manufactured by Sulzer Metco Ltd.

In the atmospheric plasma spraying method, the mean particle diameter of the powder raw material used is preferably from 10 to 100 µm, and more preferably from 15 to 80 µm. When the particle diameter of the powder raw material is small, there is a tendency that the effect of the present invention becomes remarkable. The mean particle diameter of the powder raw material is a value obtained by the measurement using a laser diffraction and scattering system particle size distribution measuring equipment.

The float glass manufacturing equipment of the present invention is described below.
The float glass manufacturing equipment of the present invention is equipped with the filmed metal member of the present invention.
Other parts are not particularly limited so long as the float glass manufacturing equipment of the present invention is equipped with the filmed metal member of the present invention, and the conventional parts may be used. The float bath atmosphere is filled with a mixed gas comprising H₂ and N₂ (for example, H₂ is from 0.5 to 10% by volume).
The temperature of the molten glass flown in the float bath is about 1,300°C, and the surface temperature of a plate glass is about 600°C at the downstream side. Because the float bath atmosphere temperature is from about 700 to 1,300°C, the temperature to which the filmed metal member of the present invention is exposed is this level.

The float glass manufacturing method of the present invention is described below.
Composition and kind of the glass, treatment conditions and the like are not particularly limited so long as the glass manufacturing method of the present invention is a method of manufacturing a float glass using the float glass manufacturing equipment of the present invention.
For example, plate glasses for display substrate, plate glasses for building material, plate glasses for solar cell panel, and plate glasses for automobiles can be manufactured.
Furthermore, the molten glass temperature in the vicinity of inlet of the float bath can be from about 1,100 to 1,300°C, and the plate glass temperature in the vicinity of outlet thereof can be from about 600 to 800°C. Those temperatures vary depending on the kind of a glass.

According to the glass manufacturing method of the present invention using the float glass manufacturing equipment of the present invention, the defect comprising Fe as the main component is difficult to be generated on the surface of a plate glass. In particular, because a plate glass for display substrate requires high quality, the plate glass can preferably be manufactured by the glass manufacturing method of the present invention using the float glass manufacturing equipment of the present invention.

### EXAMPLES

Examples of the present invention are described below.

### Test 1

Five kinds of thermal-spraying raw materials were prepared, and each raw material was thermal-sprayed on one surface of a stainless steel plate having 25 x 25 mm and a thickness of 6 mm, thereby preparing each sample. Each sample was exposed to high temperature, and after passing a given time, the cross-section surface of each sample was observed.

### Preparation of Each Sample

Thermal-spraying raw material thermal-sprayed to each stainless steel plate is as follows. The numeral just before each element in the thermal-spraying raw material name shown below means % by mass of the element. Ni in Samples 1, 2 and 5 means that it is all of the remainder excluding unavoidable impurities. Co in Samples 3 and 4 means that it is all of the remainder excluding unavoidable impurities.
Sample 1: Ni-22Cr-10Al-1Y
Sample 2: Ni-25Cr-6Al-0.4Y
Sample 3: Co-23Cr-13Al-0.7Y
Sample 4: Co-32Ni-21Cr-8Al-0.5Y
Sample 5: Ni-50Cr

In Samples 1 to 4, SUS310S was used as the stainless steel plate. In Sample 5, SUS316L was used.

The thermal-spraying was conducted by an atmospheric plasma spraying method using 9MB thermal-spraying device, manufactured by Sulzer Metco Ltd.
After thermal-spraying, the cross-section surface was observed using an electron microscope (S-3000H, manufactured by Hitachi, Ltd.), and the thickness was measured at optional three points of a central part of the portion having the film of each sample. As a result, the mean thickness was 300 µm.

### Treatment Conditions

Each sample was placed in an alumina tubular furnace, air was flown through the furnace at 0.5 liter/min, and the inner temperature of the alumina tubular furnace was maintained at 1,100°C for 100 hours.

### Results

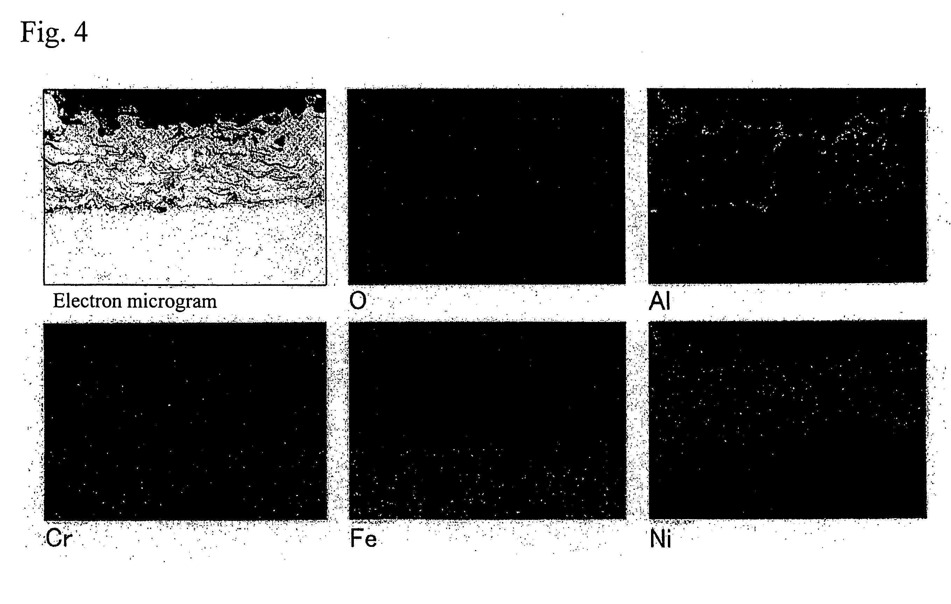

The cross-section surface of each sample after the above treatment was observed using an electron microscope (S-3000H, manufactured by Hitachi, Ltd.). Each major element distribution in the cross-section surface was measured by EPMA (INCA Enargy, manufactured by Oxford Instruments). Furthermore, each major element concentration in the cross-section surface was measured by EPMA. Specifically, each major element concentration was measured at three sites, the vicinity of a surface layer of the film in the cross-section surface, the vicinity of a boundary between the film and the stainless steel plate in the film, and the vicinity of a boundary between the film and the stainless steel plate in the stainless steel plate.
Each element concentration measurement result (% by mass) of the cross-section surface in Samples 1 to 5 is shown in Table 1 to Table 5. As the representative example, the electron microscope observation result (180 magnifications) of the cross-section surface in the case of Sample 1 and the element distribution measurement results are shown in Fig. 4.

**TABLE 1**

| Sample 1 | | | | | | | | |
|---|---|---|---|---|---|---|---|---|
| | C | O | Al | Si | Cr | Mn | Fe | Ni |
| Vicinity of surface layer of film | 5.11 | 18.93 | 19.31 | <0.5 | 14.87 | <0.5 | 0.57 | 41.21 |
| Film (Vicinity of boundary to stainless steel plate) | 5.34 | 10.14 | 12.24 | <0.5 | 16.68 | 0.92 | 3.73 | 50.96 |
| Stainless steel plate (Vicinity of boundary to film) | 4.71 | 5.03 | 0.31 | 0.51 | 22.13 | 1.05 | 41.45 | 24.81 |

**TABLE2**

| Sample 2 | | | | | | | | |
|---|---|---|---|---|---|---|---|---|
| | C | O | Al | Si | Cr | Mn | Fe | Ni |
| Vicinity of surface layer of film | 5.25 | 10.86 | 10.89 | <0.5 | 19.32 | <0.5 | <0.5 | 53.67 |
| Film (Vicinity of boundary to stainless steel plate) | 6.1 | 8.07 | 9.26 | <0.5 | 20.22 | <0.5 | 6.33 | 50.01 |
| Stainless steel plate (Vicinity of boundary to film) | 4.18 | 3.67 | <0.5 | 0.47 | 23.09 | 1.11 | 46.58 | 20.89 |

**TABLE 3**

| Sample 3 | | | | | | | | | |
|---|---|---|---|---|---|---|---|---|---|
| | C | O | Al | Si | Cr | Mn | Fe | Co | Ni |
| Vicinity of surface layer of film | 3.46 | 10.21 | 13.36 | <0.5 | 17.58 | <0.5 | 0.61 | 54.78 | <0.5 |
| Film (Vicinity of boundary to stainless steel plate) | 3.61 | 10.26 | 12.98 | <0.5 | 18.8 | <0.5 | 9.83 | 44.53 | <0.5 |
| Stainless steel plate (Vicinity of boundary to film) | 2.63 | 1.86 | 0.78 | 0.49 | 22.12 | 0.87 | 42.88 | 11.34 | 17.03 |

**TABLE 4**

| Sample 4 | | | | | | | | |
|---|---|---|---|---|---|---|---|---|
| | C | O | Al | Si | Cr | Fe | Co | Ni |
| Vicinity of surface layer of film | 2.52 | 9.73 | 13.1 | <0.5 | 18 | <0.5 | 31.4 | 25.2 |
| Film (Vicinity of boundary to stainless steel plate) | 2.56 | 8.87 | 12.1 | <0.5 | 17.9 | 8.74 | 25.2 | 24.7 |
| Stainless steel plate (Vicinity of boundary to film) | 2.26 | <0.5 | 0.91 | 0.57 | 22.4 | 33.8 | 14.1 | 26 |

**TABLE 5**

| Sample 5 | | | | | | | | |
|---|---|---|---|---|---|---|---|---|
| | C | O | Si | Cr | Mn | Fe | Ni | Mo |
| Vicinity of surface layer of film | 4.56 | 13.12 | 1.92 | 38.16 | <0.5 | 4.53 | 37.71 | <0.5 |
| Film (Vicinity of boundary to stainless steel plate) | 4.11 | 10.68 | 3.28 | 32.79 | 1.42 | 12.24 | 35.49 | <0.5 |
| Stainless steel plate (Vicinity of boundary to film) | 4.5 | 4.2 | 0.53 | 19.77 | 0.74 | 54.41 | 13.32 | 2.54 |

As shown in Tables 1 to 4, in Samples 1 to 4 corresponding to the filmed metal member of the present invention, Fe concentration in the film, particularly in the vicinity of the surface layer of the film, is low as 0.61% by mass or less.
It was confirmed from the electron microgram that thin film-shaped materials are present in the film. It was confirmed from the electron microgram, Al distribution view and O distribution view, as shown in Fig. 4 that the presence positions of Al and O are overlapped with the presence positions the thin film-shaped materials in the electron microgram, and a thin film comprising Al₂O₃ is formed inside the film. It was confirmed from the Fe distribution view that Fe is not almost present in the film (that is, Fe does not diffuse in the film from the stainless steel plate). Fig. 4 is the case of Sample 1, and the electron microgram and each element distribution view of Samples 2 to 4 were similar to those of Sample 1.
Therefore, when the metal member having the film of Samples 1 to 4 is used in the float bath, it is considered that diffusion of Fe into the atmosphere of the float bath is inhibited, and the defect is not generated on the surface of a plate glass.
The contents (% by volume) of Al₂O₃ of Samples 1 to 4 are 30.3% by volume, 19.8% by volume, 37.2% by volume and 25.4% by volume, respectively.

Contrary to this, in Sample 5 which does not correspond to the filmed metal member of the present invention, Fe concentration in the film was increased as shown in Table 5. The Fe concentration in the vicinity of the surface layer of the film showed high value of 4.53% by mass.
It was confirmed from the electron microgram that the thin film was not formed in the film. It was confirmed from the Fe distribution view that Fe is diffused up to the surface layer portion of the film.
Therefore, when the metal member having the film of Sample 5 is used in the float bath, it is considered that Fe is diffused into the atmosphere of the float bath, and the defect is liable to be generated on the surface of a plate glass.

### Test 2

Ni-22Cr-10Al-1Y (mean particle diameter: about 50 µm) was thermal-sprayed to the entire surface facing the float bath atmosphere, of a sealing member (made of SUS310S) of a float glass manufacturing equipment. The thermal-spraying was conducted by an atmospheric plasma spraying method using 9MB thermal-spraying device, manufactured by Sulzer Metco Ltd. After thermal-spraying, thickness was measured at optional three points of a central part of the portion having the film of the metal member using a micrometer. As a result, the mean thickness was 300 µm.

This sealing member was attached to the vicinity of upstream of the float bath.
The float bath is constituted of a molten tin bath and a ceiling, the inside of which are lined with a refractory, and has a sealed structure. The inside of the float bath is filled with a mixed gas comprising H₂ and N₂ (H₂ is about 5% by volume).
The temperature of the molten glass flown in the float bath was about 1,300°C, and the temperature of a plate glass at the downstream side was about 800°C.
The float bath atmosphere temperature in the vicinity of the sealing member attached was about 1,050°C.

A plate glass for liquid crystal display substrate was manufactured by the glass manufacturing equipment. The glass composition was S₁O₂-Al₂O₃-B₂O₃ alkali-free glass.

A glass was manufactured by the glass manufacturing equipment, a sealing member was taken out after passing one month, and the cross-section surface of the film was observed. Specifically, the cross-section surface was observed using an electron microscope and each element distribution in the cross-section surface was measured with EDX, in the same manner as in Test 1 above. Furthermore, each element concentration in the cross-section surface was measured with EDX.

As a result, similar result as in the case of Sample 1 in Test 1 above was obtained.
Even after passing one month, separation of the film was not observed.
The defect comprising Fe as a main component was not generated on the surface of a plate glass produced.

While the present invention has been described in detail and with reference to specific embodiments thereof, it will be apparent to one skilled in the art that various changes and modifications can be made therein without departing from the spirit and scope thereof.
This application is based on Japanese Patent Application No. 2008-319541 filed on December 16, 2008, and the contents thereof are incorporated herein by reference.

### DESCRIPTION OF REFERENCE NUMERALS AND SIGNS

- 1: Float bath
- 2: Sealing member
- 3: Brick-receiving member
- 4: Assist roll cover
- 6: Observation window
- 7: Assist roll
- 8: Glass ribbon
- 9: Molten tin
- 10: Filmed metal member of the present invention
- 12: Film
- 14: Al₂O₃ thin film
- 16: Metal member

## Claims

1. A metal member with a film for a float glass manufacturing equipment, having a portion exposed to the atmosphere in a float bath,
wherein the film has a mean thickness of from 50 to 500 µm and comprises Ni and/or Co, Cr and Al₂O₃ as main components;
the Al₂O₃ content in the film is from 5 to 40% by volume;
the Al₂O₃ is present in a thin film state in the surface direction of the metal member, inside the film; and
the metal member contains Fe in an amount of from 40 to 98% by mass and has the film on the exposed portion.

2. A float glass manufacturing equipment comprising the metal member with a film according to claim 1.

3. A method for manufacturing a float glass, which comprises manufacturing a plate glass using the float glass manufacturing equipment according to claim 2.
